# EUROPÄISCHE PATENTANMELDUNG

(11) **EP 3 281 765 A2**
(43) Veröffentlichungstag der Anmeldung: **14.02.2018**
(21) Anmeldenummer: 17185785.7
(22) Anmeldetag: 10.08.2017
(51) Int. Cl.: B29C 47/10, B29C 47/08, B29C 31/04

(54) **VORRICHTUNG ZUM BESCHICKEN EINES EXTRUDERS**

(30) Priorität: 12.08.2016 DE 102016115049
(71) Anmelder: TROESTER GmbH & Co. KG, 30519 Hannover (DE)
(72) Erfinder: HOFFMANN, Wieland, 30539 Hannover (DE); RENZ, Eugen, 30880 Laatzen (DE); PREICK, Dennis, 31832 Springe (DE)
(74) Vertreter: Scheffler, Jörg

(57) **Zusammenfassung**

Die Erfindung betrifft eine Vorrichtung (1) zum Beschicken eines Schneckenextruders mit Materialstreifen (2) aus Kautschuk- oder Kunststoffmischungen, die in einer zickzackförmig gefalteten Anordnung bereitgestellt und mittels zumindest eines Transportbandes (3) einem Zuführbereich (4) eines zumindest abschnittsweise trichterförmigen Zuführelementes (5) einem Extruder (6) zugeführt werden. Innerhalb des Zuführbereiches (4) ist eine motorisch angetriebene Fördereinrichtung (7) für den Materialstreifen (2) angeordnet, die eine gegen die Oberfläche des Materialstreifens (2) anlegbare, reversierend bewegliche Druckfläche (8) aufweist. Diese liegt ausschließlich in der Förderrichtung (9) gegen die Oberfläche des Materialstreifens (2) an und nimmt in Gegenrichtung zu der Förderrichtung (9) eine zu der Oberfläche des Materialstreifens (2) beabstandete Rückführposition ein.

## Beschreibung

Die Erfindung betrifft eine Vorrichtung zum Beschicken eines insbesondere als Schneckenextrudern ausgeführten Extruders mit Materialstreifen aus Kautschuk- und/oder Kunststoffmischungen, die in insbesondere zickzack- oder wig-wag-förmiger Anordnung bereitgestellt werden und die dem Extruder mittels zumindest eines Fördermittels einem zumindest abschnittsweise trichterförmigen Zuführbereich eines Zuführelementes zuführbar sind, wobei innerhalb des Zuführbereiches eine motorische angetriebene Fördereinrichtung für den Materialstreifen angeordnet ist.

Bei der Beschickung von Schneckenextrudern mit Kautschukmischungen und/oder thermoplastischen Massen kommt es im Betrieb solcher Vorrichtungen in der Praxis auf eine hohe Kontinuität der Materialzusammensetzung und der Beschickung an, um optimale Ergebnisse zu erzielen.

In den meisten Fällen werden die zu verarbeitenden Mischungen in Form von langen Streifen, die Felle genannt werden, auf Paletten liegend angeliefert und über Transportbänder dem Schneckenextruder zugeführt, wie dies beispielsweise aus der DE 23 64 539 A1 bekannt ist.

Bei den im Zickzack oder wig-wag liegenden Mischungsfellen werden die Fellanfänge von Hand oder mittels speziell entwickelter Hilfsvorrichtungen in das Beschickungsgerät oder in den Extrudertrichter direkt eingegeben. Danach läuft das Mischungsfell, gegebenenfalls auch zwei oder mehrere Mischungsfelle, automatisch weiter, bis die Palette entleert ist. Voraussetzung hierbei war auch, dass der oder die Mischungsstreifen im Gesamtquerschnitt möglichst gut auf die optimale Materialaufnahme durch den Extruder abgestimmt waren.

Eine eventuell zu geringe Fütterung durch zu einen kleinen Streifenquerschnitt bringt bei dieser Methode eine unzureichend gefüllte Schnecke, was sich nachteilig auf die Plastifizierwirkung des Extruders auswirken kann und eine deutliche Minderleistung. Ein zu großer Fellfütter-Querschnitt dagegen hat eine Trichterverstopfung mit Beschickungsstörung oder sogar Beschickungsunterbrechung zur Folge.

Eine Vorrichtung zum selbsttätigen Einziehen von elastomerem Material in Schneckenpressen ist beispielsweise aus der DE 28 37 463 A1 bekannt. Diese weist wenigstens eine Einzugswalze für Mischungsmaterial auf, welche im Abstand vor der Extruderschnecke angeordnet und unabhängig von der Schnecke angetrieben ist. Dabei wird dem Extruder das Material über einen Trichter zugeführt, welche im Abstand vor der Extruderschnecke angeordnet und unabhängig von der Schnecke angetrieben ist. Als Antriebe eignen sich Hydraulikmotoren.

Die DD 2 32 876 A1 betrifft eine Vorrichtung zum kontinuierlichen Beschicken eines Extruders mit einer Speisewalze und einer der Einfüllöffnung des Extruders vorgelagerten Abzugswalze. Die Kombination der Abzugswalze mit einer Konterwalze soll je nach Erfordernis den Abzug und das Abbremsen des Fütterstreifens bewirken.

Dabei besteht neben der Forderung der gleichmäßigen Fütterung noch die Notwendigkeit der wirtschaftlichen, weitgehend automatisierten Arbeitsweise. Weiterhin besteht je nach Anwendungszweck auch der Wunsch, zwei oder mehr Felle gleichzeitig einzuspeisen, wodurch bei der kontinuierlichen Ausformung gewisse unvermeidliche Mischungsinhomogenitäten verschwinden.

In der Praxis erfolgt die Fellbeschickung oftmals rein manuell. Mit der Entwicklung großer Schneckenextruder für Kaltbeschickung mit hohen Durchsatzleistungen gelangt diese Arbeit jedoch an ihre Grenzen, sodass zur maschinellen Beschickung übergegangen wird.

Aus der DE 27 46 187 B1 ist eine Vorrichtung zum gesteuerten Zuführen einer streifenförmigen Kautschukmischung in die Eingabeöffnung einer Schneckenmaschine mit einem zwischen einer Zuführeinrichtung und der Eingabeöffnung angeordneten trichterförmigen Einzugsschacht bekannt. Eine mit einem ständigen Kippmoment beaufschlagte Pendelklappe überdeckt den gesamten Durchtrittsquerschnitt des Einzugsschachtes. In dem rückwärtig aus dem Einzugsschacht ragenden Ende der Pendelklappe ist eine Schalteinrichtung zur Auslösung von Schaltimpulsen zur Steuerung der Zuführeinrichtung mittels feststehender Näherungsschalter vorgesehen.

In der DE 22 44 059 C3 ist eine Zuführungsvorrichtung zur gewichtsdosierten gleichförmigen Zugabe von Streifenabschnitten einer Kautschukmischung in eine Schneckenmaschine beschrieben.

Aus der DE 19 61 632 A1 ist eine Vorrichtung zum Zuführen eines Kautschuk- oder Kunststoffstreifens in den Aufgabetrichter bekannt, bei welcher der Antrieb des Förderers und einer Schneideinrichtung in Abhängigkeit des Füllungszustandes des Aufgabetrichters erfolgt. Dabei wird der Füllungszustand des Aufgabetrichters auf fotoelektrischem Wege abgetastet.

Bei einer anderen, aus der DE 19 28 293 C3 bekannten Vorrichtung erfolgt das Beschicken von Schneckenpressen mit plastisch verformbaren Stoffen durch gesteuertes Zuführen eines fortlaufenden Streifens, wobei dessen Zuführung durch Abtasten des sich im Einfülltrichter der Schneckenpresse ausbildenden Wulstes über eine auf den Streifen einwirkende Bremsvorrichtung gesteuert wird.

Bei einer aus dem DE 77 10 535 U bekannten Vorrichtung erfolgt eine Korrektur der Materialzuführung aufgrund eines Materialstaus in der Füllöffnung zum Extruder.

Ferner bezieht sich die DE 35 05 128 A1 auf eine Vorrichtung zur Herstellung von Folien aus einer Trägerbahn aus thermoplastischem Kunststoff. Ein Abzugswalzenpaar für den Elastomer-Fütterstreifen wird von einem weiteren regelbaren Antrieb in Drehung versetzt.

Der Erfindung liegt die Aufgabe zugrunde, eine Vorrichtung zur gesteuerten gleichförmigen Zuführung von Materialstreifen zu schaffen, durch welche eine erleichterte und vergleichmäßigte Beschickung sowie eine erleichterte Bedienung erreicht werden soll.

Diese Aufgabe wird erfindungsgemäß mit einer Vorrichtung gemäß den Merkmalen des Anspruches 1 gelöst. Die weitere Ausgestaltung der Erfindung ist den Unteransprüchen zu entnehmen.

Erfindungsgemäß ist also eine Vorrichtung vorgesehen, bei der die Fördereinrichtung eine gegen die Oberfläche des Materialstreifens anlegbare reversierend oder revolvierend bewegliche Druckfläche aufweist, die in Förderrichtung gegen die Oberfläche des Materialstreifens anliegt und in Gegenrichtung zu der Förderrichtung zu dieser beabstandet ist. Somit wird mittels der Druckfläche lediglich in Förderrichtung die zum Transport erforderliche Druckkraft bzw. Reibkraft ausgeübt, die das Material jeweils sequentiell in Förderrichtung transportiert. Die Andruckkraft erfolgt dabei entweder aufgrund einer Wegsteuerung, sodass gegenüber einer als Widerlager dienenden Fläche ein bestimmter Abstand eingehalten wird oder es wird die auf das Material übertragene Kraft erfasst und bei Erreichen eines Sollwertes eine weitere Zustellung der Druckfläche gegen das Material unterbunden. Hierdurch wird eine zuverlässige Zuführung des Materialstreifens auch dann sichergestellt, wenn die Menge des zugeführten Materials schwankt, wie dies beispielsweise dann der Fall ist, wenn unbeabsichtigt mehrere Lagen des Materialstreifens aneinanderhaften und dadurch gemeinsam mittels des Transportbandes zugeführt werden. Ein manueller Eingriff in den Zuführbereich ist daher nicht mehr erforderlich. Vielmehr übernimmt erfindungsgemäß die Fördereinrichtung die Zuführung des Materials innerhalb des trichterförmigen Zuführelementes und verhindert so zugleich einen unerwünschten Rückstau des Materials.

Vorzugsweise ist die motorisch angetriebene Fördereinrichtung innerhalb des Zuführbereiches eine für den Materialstreifen angeordnet und erstreckt sich zwischen einem Einlass und einem Spalt der Speisewalze.

Die vollständige Bewegungsabfolge beginnt somit mit einer Zustellbewegung der Druckfläche gegenüber dem Material, die im Wesentlichen senkrecht zur Oberfläche des Materials erfolgt. Sobald die zur Kraftübertragung geeignete Sollposition erreicht ist, beginnt die Einleitung einer translatorischen Bewegung in Förderrichtung, wobei die Druckfläche als Mitnehmer oder Schieber wirkt. Durch diese Bewegung wird das Material um einen bestimmten Betrag in Richtung des Extruders bewegt. Sobald diese translatorische Endposition erreicht wird, wird die Druckfläche von der Oberfläche des Materials gelöst und ohne Eingriff in die Ausgangsstellung zurückbewegt. Der gesamte Bewegungsablauf erfolgt vorzugsweise in einem kontinuierlichen Betrieb.

Mehrere Druckflächen können in Fördereinrichtung aufeinanderfolgend angeordnet sein. Gemäß einer besonders bevorzugten Ausgestaltungsform der Erfindung weist die Fördereinrichtung zumindest zwei in Förderrichtung parallel zueinander angeordnete Druckflächen auf, die antizyklisch oder gegenzyklisch betrieben werden, sodass die Druckflächen abwechselnd in Eingriff mit dem Materialstreifen sind. Hierdurch wirkt stets zumindest eine Druckfläche auf den Materialstreifen, sodass eine unerwünschte und unkontrollierte Bewegung des Materialstreifens entgegen der Förderrichtung, verursacht durch eine Materialanhäufung, zuverlässig vermieden werden kann.

Gemäß einer weiteren vereinfachten Variante der Fördereinrichtung ist die Druckfläche in einer einzigen Ebene reversierend translatorisch beweglich antreibbar, wobei die Druckfläche zumindest abschnittsweise durch mehrere mit einem gemeinsamen oder einem jeweiligen Freilauf ausgestattete Rollen gebildet ist. Hierdurch genügt eine einfache reversierende Bewegung in einer einzigen Ebene, wobei die mit dem Freilauf ausgestatteten Rollen in Förderrichtung in ihrem Rotationsfreiheitsgrad gesperrt sind und daher durch die Reibkraft zwischen der Lauffläche der Rollen und dem Material die gewünschte Förderbewegung erzeugen und in einer Gegenrichtung frei auf dem Material abrollen können.

Als Widerlager für die Andruckkraft dient dabei eine vorzugsweise ebene Innenwandfläche des trichterförmigen Zuführbereiches. Dabei ist die Druckfläche nicht auf eine ebene Formgebung beschränkt. Vielmehr kann die Druckfläche auch in einer Querrichtung zu der Förderrichtung regelmäßig oder unregelmäßig wiederkehrende Ausformungen als Vorsprünge oder Vertiefungen aufweisen. Weiterhin kann die Druckfläche beispielsweise konvex ausgeführt und an die Innenwandfläche des Trichters angepasst sein.

Eine bevorzugte derartige Ausgestaltungsform der Druckfläche wird dadurch realisiert, dass die Druckfläche eine insbesondere sägezahnartige Profiliierung aufweist. Hierdurch wird die Kraftübertragung in Förderrichtung weiter verbessert, wobei zur Vermeidung von Anhaftungen an der Profilierung zusätzliche Abstreifer vorgesehen sein können, welche beim Zurücksetzen der Druckfläche gegen das Material angelegt werden und diese von der Druckfläche trennen.

Als Widerlager für das Material wird die Innenwandfläche des Trichters genutzt. Darüber hinaus hat es sich bereits als besonders praxisgerecht erwiesen, wenn die Fördereinrichtung eine Auflagefläche für das Material mit freilaufenden Rollen aufweist, sodass der bei der Vorschubbewegung auftretende Reibungswiderstand reduziert werden kann.

Alternativ ist selbstverständlich auch eine Variante realisierbar, bei welcher das Material zwischen zwei synchron beweglich angetriebenen Druckflächen eingeschlossen ist.

Bei einer weiteren besonders praxisgerechten Variante der Erfindung ist die Druckfläche durch die Umfangsfläche mehrerer in Förderrichtung aufeinanderfolgender, motorisch angetriebener Rollen gebildet, um so die Förderwirkung zu erzielen, wobei die angetriebenen Rollen einseitig oder beidseitig auf das Material wirken können.

Gemäß einer besonders bevorzugten weiteren erfindungsgemäßen Abwandlung weist die Fördereinrichtung ein endlos umlaufendes Band auf, welches insbesondere kontinuierlich betrieben wird. Selbstverständlich kann das Material auch zwischen zwei einander gegenüberliegenden Bändern eingeschlossen sein, um so eine besonders zuverlässige Materialzuführung zu erreichen. Zudem lässt sich das beispielsweise als Gewebeband oder Modulband ausgeführte Transportband in die vorhandenen Transportbänder problemlos integrieren.

Weiterhin weist gemäß einer besonders bevorzugten Ausführungsform der Erfindung die Fördereinrichtung eine Rücklaufsperre auf, sodass das Material nicht entgegen der Förderrichtung aus dem Zuführbereich austreten kann. Die Rücklaufsperre hat hierzu beispielsweise eine Sperrklappe, die der Materialstreifen lediglich in Förderrichtung passieren kann.

Eine andere besonders Erfolg versprechende Ausgestaltungsform der Erfindung wird dadurch erreicht, dass der Zuführbereich durch eine zumindest abschnittsweise schneckenförmig ausgeführte Begrenzungsfläche, insbesondere Wandfläche des Zuführelementes begrenzt ist, sodass ein erster Rand des Materialstreifens unter den gegenüberliegenden Rand des Materialstreifens geschoben wird. Hierdurch wird eine besonders kompakte Form des Materialstreifens erreicht, indem dieser nicht in Querrichtung der Förderrichtung gestaucht wird, sondern durch die Begrenzungsflächen eingerollt wird. Ein wesentlicher Effekt wird dabei durch unterschiedliche Biegeradien der einander gegenüberliegenden Begrenzungsflächen erreicht, wodurch der Rand des Materialstreifens, welcher auf den geringeren Biegeradius trifft, den Kern der Rolle oder Wicklung bildet und der gegenüberliegende Rand des Materialstreifens gegen den Umfang dieses Kerns gelegt wird. Auf diese Weise ergibt sich eine enge Rolle oder Wicklung mit in Förderrichtung kleiner werdendem Umfang. Die Begrenzungsfläche kann dabei als ein gesondertes Führungselement innerhalb des Zuführbereiches oder als Bestandteil der Wandfläche des Zuführelementes ausgeführt sein.

Ein andere, ebenfalls besonders sinnvolle Abwandlung der Erfindung wird auch dadurch geschaffen, dass die Vorrichtung eine Spleißeinrichtung mit einem Stempel zum Einbringen einer nicht ringförmig geschlossenen Trennlinie in zumindest zwei übereinanderliegende Materialstreifen aufweist. Indem mittels des Stempels ein der Stempelfläche entsprechender Bereich des ersten Materialstreifens abschnittsweise von den benachbarten Bereichen des Materials getrennt und in die Ebene des darunterliegenden Materialstreifens verlagert wird, kommt es durch die Verlagerung zu einer mechanischen Verklammerung durch Hinterschneidung und somit zu einer formschlüssigen Verbindung. Hierdurch werden in Längsrichtung aufeinanderfolgende Materialstreifen innerhalb eines Überlappungsbereiches zuverlässig verbunden und können unterbrechungsfrei dem Extruder zugeführt werden. Als Unterlage für den Stempel eignen sich neben ebenen Flächen als Widerlager auch konturierte Gesenke.

Besonders bevorzugt ist die Trennlinie auf einem Teilbereich, insbesondere von nicht mehr als 80 %, vorzugsweise auf nicht mehr als 50 % der Umfangskontur des Stempels beschränkt, sodass ein vollständiges Heraustrennen der Stempelfläche aus dem Materialstreifen vermieden wird und der Bereich zumindest in einem Bereich mit dem Materialstreifen verbunden bleibt. Hierdurch wird die mechanische Verklammerung weiter optimiert und unerwünschte Materialverluste werden vermieden.

Eine weitere, ebenfalls besonders Erfolg versprechende Ausführungsform der Erfindung wird dadurch erreicht, dass die Spleißeinrichtung einen relativ zu dem Stempel beweglichen Gegenhalter zum Lösen des Stempels von dem Materialstreifen aufweist. Hierdurch wird beim Zurückziehen des Stempels nach dem Einbringen der Stanzung ein unerwünschtes Anhaften und in der Folge ein Anheben des Materialstreifens vermieden. Der Gegenhalter kann hierzu beispielsweise als ein den Stempel ringförmig einschließender, beispielsweise kragenförmiger radialer Vorsprung mit einer ebenen Anlagefläche ausgeführt sein. Nach dem Einbringen der Stanzung bleibt der Gegenhalter solange in seiner gegen die Oberfläche anliegenden Halteposition, bis der Stempel vollständig zurückgezogen ist.

Außerdem kann gemäß einer weiteren Ausgestaltungsform der Erfindung die Spleißvorrichtung zur lokalen Erwärmung mit einem Heizelement zur Erhöhung der Adhäsion ausgestattet sein.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt eine Vorrichtung zum Beschicken von Extrudern jeweils in einer Prinzipdarstellung in
- Fig. 1: eine eine reversierend antreibbare Druckfläche aufweisende Fördereinrichtung innerhalb eines trichterförmigen Zuführbereiches;
- Fig. 2: die in Figur 1 gezeigte Fördereinrichtung mit einer Rücklaufsperre;
- Fig. 3: eine Variante der in Figur 1 gezeigten Fördereinrichtung mit einem endlos umlaufenden Förderband;
- Fig. 4: eine Variante der in Figur 1 gezeigten Fördereinrichtung mit mehreren angetriebenen Einzelrollen;
- Fig. 5: eine Variante der in Figur 1 gezeigten Fördereinrichtung mit gemeinsam die Druckfläche bildenden, reversierend antreibbaren und drehrichtungsbeschränkten Rollen;
- Fig. 6: einen trichterförmigen Abschnitt des Zuführelementes mit einer schneckenförmigen Begrenzungsfläche;
- Fig. 7: eine Spleißeinrichtung mit einem Stempel zur Verbindung von zwei Materialstreifen.

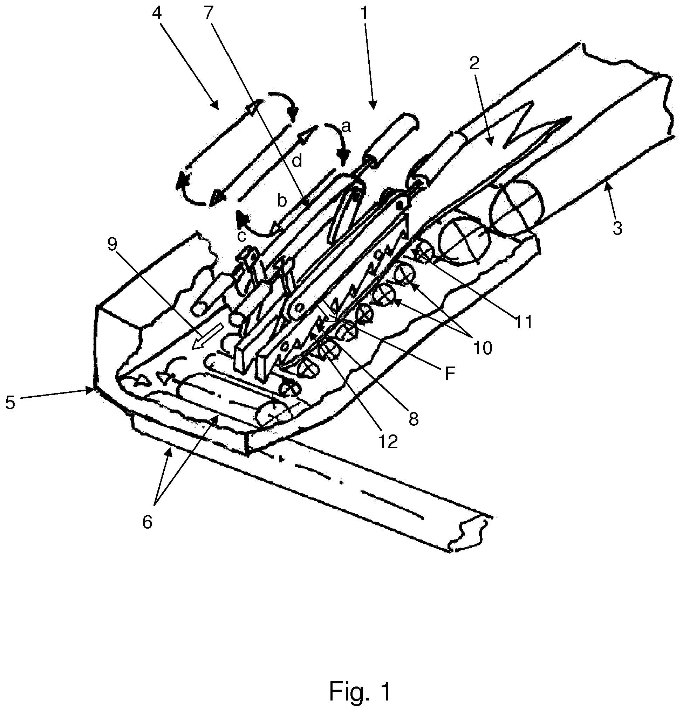

Die erfindungsgemäße Vorrichtung 1 zum Beschicken eines Schneckenextruders mit Materialstreifen 2 aus Kautschuk- oder Kunststoffmischungen wird nachstehend anhand der Figuren 1 bis 7 näher erläutert. Die Materialstreifen 2 werden zunächst in einer zickzack-oder wig-wag-förmig gefalteten Anordnung bereitgestellt und mittels zumindest eines Transportbandes 3 einem Zuführbereich 4 eines zumindest abschnittsweise trichterförmigen Zuführelementes 5 einem Extruder 6 zugeführt.

Wie in Figur 1 zu erkennen ist innerhalb des Zuführbereiches 4 zwischen einem Einlass und einer Speisewalze des Extruders 6 eine motorisch angetriebene Fördereinrichtung 7 für den Materialstreifen 2 angeordnet, die eine gegen die Oberfläche des Materialstreifens 2 anlegbare, reversierend bewegliche Druckfläche 8 aufweist. Diese liegt ausschließlich in Förderrichtung 9 gegen die Oberfläche des Materialstreifens 2 an und nimmt in Gegenrichtung zu der Förderrichtung 9 eine lediglich gestrichelt dargestellte, zu der Oberfläche des Materialstreifens 2 beabstandete Rückführposition ein. Außerdem ist eine noch weiter beabstandete, ebenfalls lediglich gestrichelt dargestellte Wartestellung einstellbar, in welcher die Fördereinrichtung 7 besser zugänglich ist.

Der Bewegungsablauf folgt einem Zyklus mit vier im Wesentlichen translatorischen Bewegungsschritten a, b, c, d, wobei die Druckfläche 8 mit ihrer sägezahnartigen Profilierung 12 zunächst durch eine Zustellbewegung in Richtung des Materialstreifens 2 und anschließend translatorisch parallel zu der Förderrichtung 9 um einen vorbestimmten Betrag in Richtung des Extruders 6 bewegt wird, sodass die zum Transport erforderliche Druckkraft F bzw. die sich daraus ableitende Reibkraft auf den Materialstreifen 2 übertragen und dieses dadurch in Förderrichtung 9 transportiert wird. Die reversierende Bewegung folgt nach einer Rückstellbewegung entgegen der Zustellbewegung, um so die Druckfläche 8 von dem Materialstreifen 2 zu lösen.

Als Widerlager für den Materialstreifen 2 dient eine durch mehrere frei drehbewegliche Rollen 10 gebildete Auflagefläche 11, wie in den Figuren 1 bis 5 dargestellt.

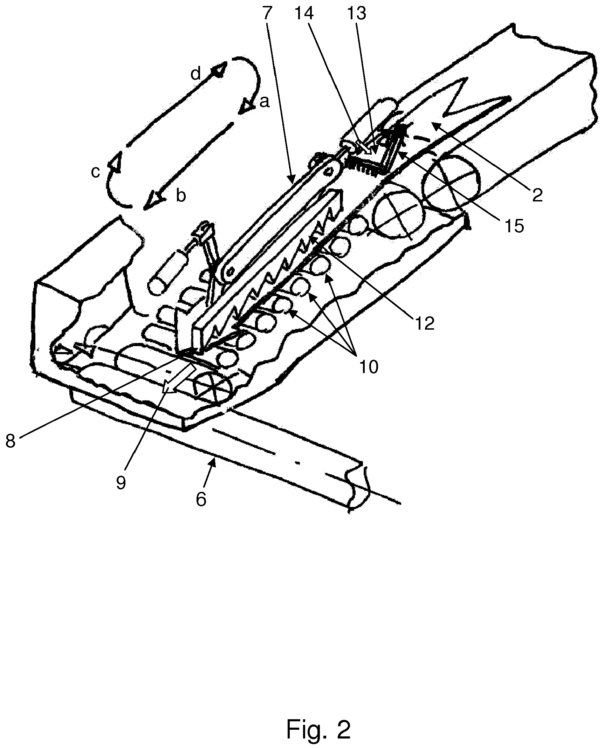

In Figur 2 ist die Fördereinrichtung 7 zusätzlich noch mit einer Rücklaufsperre 13 ausgestattet, die durch den in der Förderrichtung 9 zugeführten Materialstreifen 2 entgegen der Rückstellkraft eines Federelementes 14 auslenkbare Sperrklappe 15 aufweist. Hierdurch wird ein Überlauf des Zuführelementes 5 bei einem Materialstau zuverlässig vermieden.

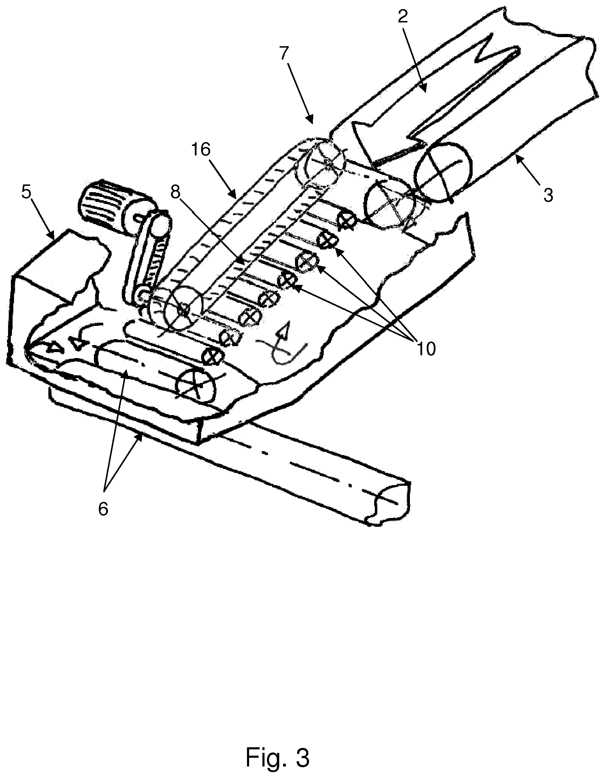

Bei der in Figur 3 gezeigten Variante der in Figur 1 gezeigten Fördereinrichtung 7 ist diese nicht mit einem reversierenden Fördermittel, sondern mit einem endlos umlaufenden Förderband 16 ausgestattet, welches die Druckfläche 8 für den nicht dargestellten Materialstreifen 2 bildet. Selbstverständlich kann auch bei dieser Variante eine einstellbare Zustellung zur Anpassung der auf den Materialstreifen 2 wirkenden Druckkraft F vorgesehen sein.

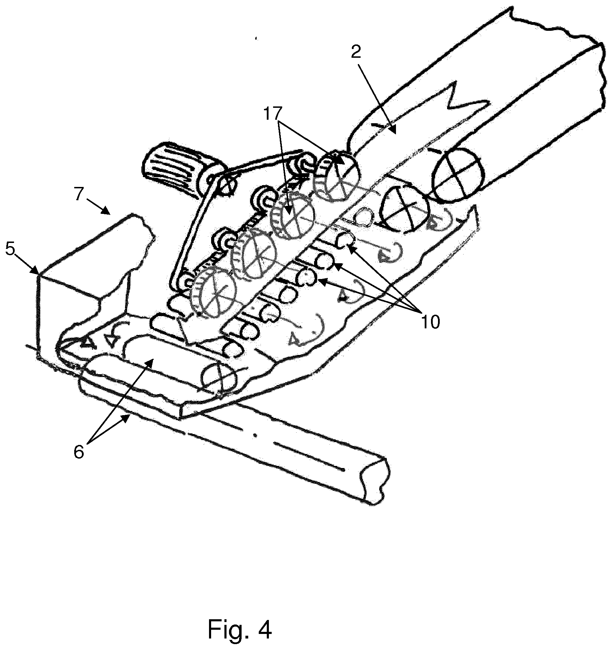

Bei der in Figur 4 gezeigten Variante der in Figur 1 gezeigten Fördereinrichtung 7 sind mehrere in einer Reihe angeordnete, jeweils einzeln oder gemeinsam angetriebene Einzelrollen 17 vorgesehen, den jeweils paarweise angeordnete freilaufende Rollen 10 als Widerlager zugeordnet sind. Die Einzelrollen 11 können an ihrem Umfang mit einer geeigneten Oberflächenbeschaffenheit versehen und/oder auch temperierbar ausgeführt sein.

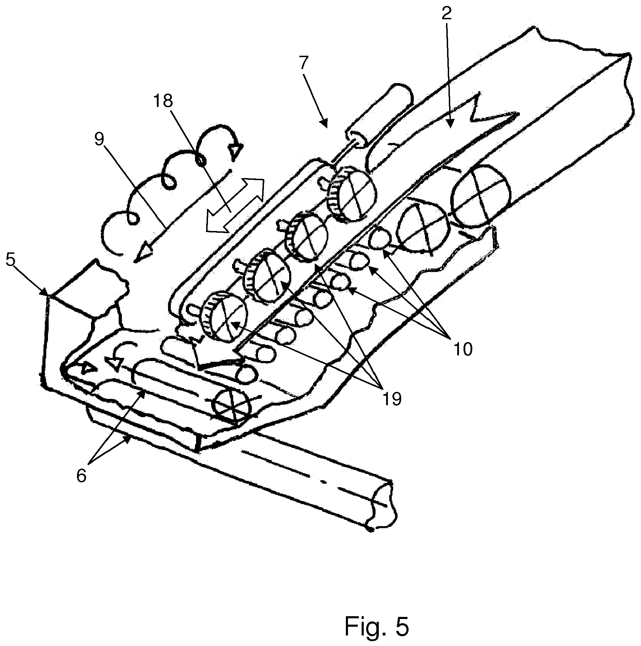

Demgegenüber ist in Figur 5 eine Variante der in Figur 1 gezeigten Fördereinrichtung 7 mit einem gemeinsam die Druckfläche 8 bildenden, in Pfeilrichtung 18 reversierend translatorisch beweglichen und drehrichtungsbeschränkten Rollen 19 gezeigt. Indem die Rollen 19 mit einem Freilauf ausgestattet sind, wirkt der Mitnahmeeffekt lediglich in Förderrichtung 9, in welcher die Rollen 19 blockiert sind und daher eine entsprechende Reibkraft auf den Materialstreifen 2 übertragen können. In der Gegenrichtung können die Rollen 19 auf dem Materialstreifen 2 abrollen, wobei lediglich eine sehr geringe Krafteinwirkung auf den Materialstreifen 2 entsteht.

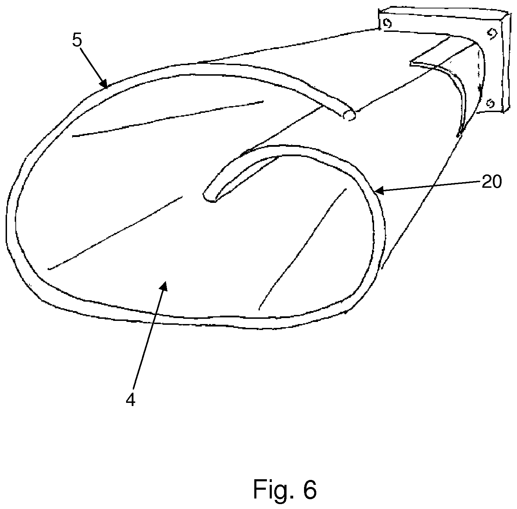

In Figur 6 ist der trichterförmige Zuführbereich 4 des Zuführelementes 5 mit einer schneckenförmigen Begrenzungsfläche 20 zu erkennen, die durch die Wandfläche des Zuführelementes 5 gebildet ist, sodass ein erster Rand des nicht gezeigten Materialstreifens 2 unter den gegenüberliegenden Rand des Materialstreifens 2 geschoben wird. Hierdurch wird eine kompakte Wicklung des Materialstreifens 2 erreicht, bei der die Ränder nicht gegeneinander anstoßen.

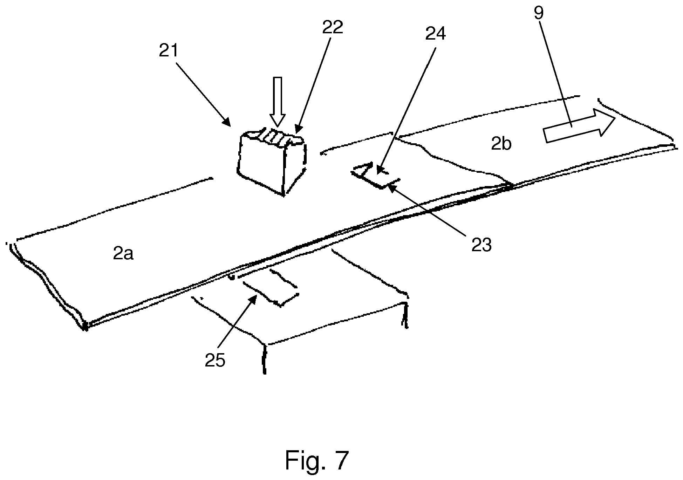

Schließlich ist in Figur 7 noch eine Spleißeinrichtung 21 mit einem Stempel 22 zur Verbindung von zwei aufeinanderfolgenden Materialstreifen 2a, 2b in einem Überlappungsbereich gezeigt. Entlang einer Trennlinie 23, welche ein in Förderrichtung 9 vorn liegenden Teilbereich ausspart, wird eine Stanzfläche 24 gebildet, die durch den Stempel 22 aus dem oberen Materialstreifen 2a in den unteren Materialstreifen 2b gepresst wird und dort mechanisch mit Hilfe eines Gesenkes 25 verklammert wird. Hierdurch werden die Materialstreifen 2 zuverlässig verbunden und können unterbrechungsfrei dem Extruder 6 zugeführt werden.

**BEZUGSZEICHENLISTE**

| | | | |
|---|---|---|---|
| 1 | Vorrichtung | 16 | Förderband |
| 2 | Materialstreifen | 17 | Einzelrolle |
| 3 | Transportband | 18 | Pfeilrichtung |
| 4 | Zuführbereich | 19 | Rolle |
| 5 | Zuführelement | 20 | Begrenzungsfläche |
| | | | |
| 6 | Extruder | 21 | Spleißeinrichtung |
| 7 | Fördereinrichtung | 22 | Stempel |
| 8 | Druckfläche | 23 | Trennlinie |
| 9 | Förderrichtung | 24 | Stanzfläche |
| 10 | Rolle | 25 | Gesenk |
| | | | |
| 11 | Auflagefläche | F | Druckkraft |
| 12 | Profilierung | a, b, c, d, | Bewegungsschritte |
| 13 | Rücklaufsperre | | |
| 14 | Federelement | | |
| 15 | Sperrklappe | | |

## Patentansprüche

1. Vorrichtung (1) zum Beschicken eines insbesondere als Schneckenextrudern ausgeführten Extruders (6) mit Materialstreifen (2) aus Kautschuk- und/oder Kunststoffmischungen, die dem Extruder (6) mittels zumindest eines Fördermittels einem zumindest abschnittsweise trichterförmigen Zuführbereich (4) eines Zuführelementes (5) zuführbar sind, wobei innerhalb des Zuführbereiches (4) eine motorisch angetriebene Fördereinrichtung (7) für zumindest einen Materialstreifen (2) angeordnet ist, **dadurch gekennzeichnet, dass** die Fördereinrichtung (7) eine gegen die Oberfläche des Materialstreifens (2) anlegbare, reversierend bewegliche Druckfläche (8) aufweist, die bei einer Bewegung in Förderrichtung (9) gegen die Oberfläche des Materialstreifens (2) anliegt und in Gegenrichtung von dieser beabstandet ist.

2. Vorrichtung (1) nach Anspruch 1, **dadurch gekennzeichnet, dass** die motorisch angetriebene Fördereinrichtung (7) innerhalb des Zuführbereiches (4) zwischen einem Einlass und einer Speisewalze des Extruders (6) angeordnet ist.

3. Vorrichtung (1) nach den Ansprüchen 1 oder 2, **dadurch gekennzeichnet, dass** die Fördereinrichtung (7) zumindest zwei in Förderrichtung (9) parallel zueinander angeordnete Druckflächen (8) aufweist, die antizyklisch betrieben werden, sodass die Druckflächen (8) abwechselnd in Eingriff mit dem Materialstreifen (2) sind.

4. Vorrichtung (1) nach zumindest einem der vorhergehenden Ansprüche, **dadurch gekennzeichnet, dass** die Druckfläche (8) reversierend translatorisch beweglich antreibbar ist, wobei die Druckfläche (8) zumindest abschnittsweise durch mehrere mit einem Freilauf ausgestattete Rollen (19) gebildet ist.

5. Vorrichtung (1) nach zumindest einem der vorhergehenden Ansprüche, **dadurch gekennzeichnet, dass** die Druckfläche (8) eine insbesondere sägezahnartige Profilierung (12) aufweist.

6. Vorrichtung (1) nach zumindest einem der vorhergehenden Ansprüche, **dadurch gekennzeichnet, dass** die Fördereinrichtung (7) eine Auflagefläche (11) für den Materialstreifen (2) mit freilaufenden Rollen (10) aufweist.

7. Vorrichtung (1) nach zumindest einem der vorhergehenden Ansprüche, **dadurch gekennzeichnet, dass** die Druckfläche (8) durch einen Umfangsabschnitt mehrerer motorisch angetriebener Rollen (17) gebildet ist.

8. Vorrichtung (1) nach zumindest einem der vorhergehenden Ansprüche, **dadurch gekennzeichnet, dass** die Fördereinrichtung (7) ein endlos umlaufendes Förderband (16) aufweist.

9. Vorrichtung (1) nach zumindest einem der vorhergehenden Ansprüche, **dadurch gekennzeichnet, dass** die Fördereinrichtung (7) eine Rücklaufsperre (13) aufweist.

10. Vorrichtung (1) nach zumindest einem der vorhergehenden Ansprüche, **dadurch gekennzeichnet, dass** der Zuführbereich (4) durch eine zumindest abschnittsweise schneckenförmig ausgeführte Begrenzungsfläche (20), insbesondere Wandfläche des Zuführelementes (5) begrenzt ist, sodass ein erster Rand des Materialstreifens (2) unter den gegenüberliegenden Rand des Materialstreifens (2) geschoben wird.

11. Vorrichtung (1) nach zumindest einem der vorhergehenden Ansprüche, **dadurch gekennzeichnet, dass** Vorrichtung (1) eine Spleißeinrichtung (21) mit einem Stempel (22) zum Einbringen einer Trennlinie (23) in zumindest zwei übereinanderliegende Materialstreifen (2) aufweist.

12. Vorrichtung (1) nach Anspruch 11, **dadurch gekennzeichnet, dass** die Trennlinie (23) auf einem Teilbereich, insbesondere von nicht mehr als 80 %, vorzugsweise nicht mehr als 50 % der Umfangskontur des Stempels (22) beschränkt ist.

13. Vorrichtung (1) nach Anspruch 11 oder 12, **dadurch gekennzeichnet, dass** die Spleißeinrichtung (21) einen relativ zu dem Stempel (22) beweglichen Gegenhalter zum Lösen des Stempels (22) von dem Materialstreifen (2) aufweist.
